# EUROPÄISCHE PATENTSCHRIFT

(11) **EP 3 592 688 B1**
(45) Veröffentlichungstag und Bekanntmachung des Hinweises auf die Patenterteilung: **13.09.2023**
(21) Anmeldenummer: 18700048.4
(22) Anmeldetag: 03.01.2018
(51) Int. Cl.: B67B 3/26, B65G 47/51, B67C 3/00

(54) **EINHEIT UND VERFAHREN ZUM SPEICHERN UND VERTEILEN VON BEHÄLTERN SOWIE ABFÜLLANLAGE**
SYSTEM AND METHOD FOR STORING AND DISTRIBUTING CONTAINERS AND FILLING UNIT
DISPOSITIF ET PROCÉDÉ POUR STOCKER ET DISTRIBUER DES RÉCIPIENTS ET UNITÉ DE REMPLISSAGE

(30) Priorität: 07.03.2017 DE 102017203729
(43) Veröffentlichungstag der Anmeldung: 15.01.2020
(73) Patentinhaber: Krones AG, 93073 Neutraubling (DE)
(72) Erfinder: ZOELFL, Markus, 93073 Neutraubling (DE); FIEGLER, Rudolf, 93073 Neutraubling (DE); RAITH, Stefan, 93073 Neutraubling (DE); LINDNER, Peter, 93073 Neutraubling (DE)
(74) Vertreter: Grünecker Patent- und Rechtsanwälte PartG mbB
(86) Internationale Anmeldenummer: PCT/EP2018/050110
(87) Internationale Veröffentlichungsnummer: WO 2018/162120

(56) Entgegenhaltungen:
- EP-A1- 2 233 412
- WO-A1-2011/030207
- US-A- 4 514 954

## Beschreibung

Die Erfindung betrifft eine Speicher- und Verteileinheit für eine Behälterabfüllanlage, und ein Verfahren zum Speichern und Verteilen befüllter Behälter in einer Behälterabfüllanlage.

Aus US 9 266 706 B2 ist eine Abfüllanlage zur Abfüllung eines flüssigen Produkts in Behälter, wie beispielsweise Getränkeflaschen, bekannt. Demnach werden die gefüllten und verschlossenen Behälter zum einen als durchgehender Produktstrom durch Inline-Inspektionseinheiten geleitet und zusätzlich einige Behälter stichprobenartig für eine Offline-Inspektion mittels einer Ausleitvorrichtung einem Ausleitstrang zugeführt. Dies dient beispielsweise der stichprobenartigen Kontrolle einer Verschlusskraft, eines Gewichts, eines Gasgehalts und/oder eines Innendrucks der Behälter. Zugehörige Messdaten werden schließlich statistisch ausgewertet, um die Qualität einzelner Behandlungsschritte und die Funktionstüchtigkeit der verwendeten Vorrichtungen zu beurteilen. Zerstörungsfrei inspizierte Flaschen können wieder in den Hauptproduktstrang der Abfülllinie zurückgeführt werden.

Problematisch ist hierbei der unterschiedliche Zeitbedarf für die einzelnen Inspektionen sowohl im Hauptproduktstrang als auch im Ausleitstrang. Beispielsweise müssen die Behälter vor bestimmten Inspektionen eine Ruhezeit einhalten, und/oder oder die Inspektion selbst dauert vergleichsweise lang. In diesem Fall verzögern oder blockieren langsame Inspektionen insbesondere bei einer seriellen Verkettung einzelner Inspektionen den Zustrom der Behälter zu demgegenüber kürzeren Inspektionen. Darunter leidet die Leistung des Kontrollsystems und der Abfülllinie insgesamt. Folglich lassen sich derartige Kontrollsysteme meist nicht effizient auslasten und sind entsprechend aufwändig transporttechnisch anzubinden.

Aus EP 2 233 412 A1 ist ferner ein Speicher / Produktpuffer für Behälter, beispielsweise Spritzenkörper oder Flaschen, in einer Abfüllanlage, und damit eine Speicher- und Verteileinheit gemäß dem Oberbegriff des Anspruchs 1, bekannt. Die Behälter laufen demnach an einem Einlaufförderband ein, werden daran hängend in linearer Gruppierung an ihren Seitenwänden von einem Roboter gemeinsam gegriffen und am Ende des Einlaufförderbands um 90° horizontal gedreht. Der Roboter bewegt die Behälter dann gemeinsam vom Einlaufförderband weg zu einem von mehreren schienenförmigen Aufnahmefächern und setzt die Behälter dort gemeinsam ab. Die Tiefe der Aufnahmefächer entspricht im Wesentlichen der Länge der linearen Behältergruppen. Die Aufnahmefächer gehören zu treppenartig gestaffelten Speicherbereichen.

Die zuvor gefüllten Behälter werden vorzugsweise nach dem First-In-First-Out-Prinzip wieder ausgespeichert und an einem Auslauftransporteur zur anschließenden Verpackung übergeben. Hierfür werden die Behälter stets gruppenweise in je ein Aufnahmefach eingespeichert und auch gruppenweise wieder ausgespeichert. Die Größen der linearen Behältergruppen, der Greifer des Roboters und der Aufnahmefächer sind aneinander angepasst.

Auch aus US 4,514,954 ist ein System zum Inspizieren und Verteilen von Behältern in einer Abfüllanlage bekannt, wobei die Behälter zum einen inline inspiziert werden und als fehlerhaft erkannte Behälter auf Ausleitspuren geleitet werden. Zudem werden einzelne Behälter auf eine Stichprobenspur geleitet, um diese Behälter für Offline-Inspektionen, Probennahme für Behörden oder dergleichen bereitzustellen. Die Behälter werden in der Reihenfolge ihres Einlaufens auf die entsprechenden Spuren verteilt. Es handelt sich somit um ein sequentielles Verteilungssystem zur Behälterinspektion in einer Abfüllanlage.

Es besteht daher Bedarf für eine effizientere Offline-Inspektion befüllter Behälter.

Die gestellte Aufgabe wird mit einer Speicher- und Verteileinheit gemäß Anspruch 1 gelöst. Demnach eignet sich diese für eine Behälterabfüllanlage und umfasst: einen Speicher mit insbesondere rasterförmig verteilten Speicherbereichen für einzelne Behälter, mit einem Behälterzulauf zum Anschluss an einen Ausleitstrang einer Abfülllinie und mit einem Behälterauslauf zum Anschluss an nachfolgende Inspektionseinheiten; einen Roboter zum Einspeichern befüllter Behälter durch Übergabe vom Behälterzulauf in die Speicherbereiche sowie zum Ausspeichern der Behälter durch Übergabe von den Speicherbereichen zum Behälterauslauf; und eine programmierbare Steuerung für den Roboter, die zum selektiven Ausspeichern der Behälter unabhängig vom Zeitpunkt und/oder der Reihenfolge ihres Einspeicherns ausgebildet ist.

Der Roboter ist erfindungsgemäß zur Handhabung einzelner Behälter durch Greifen ihres Hals- und/oder Verschlussbereichs beim Einspeichern in je einen Speicherbereich und beim Ausspeichern aus je einem Speicherbereich ausgebildet, und die Steuerung ist zum Ausspeichem auf der Grundlage eines elektronisch abgelegten Inspektionsplans eingerichtet.

Der Roboter ist bevorzugt als Handling-Einheit bzw. Industrieroboter ausgeführt. Dieser kann beispielsweise ein Portal-, ein Knickarm-, ein SCARA- oder Hexapod-Roboter sein. Ebenso möglich ist eine Verteilung mittels Verteilstern.

Die Speicher- und Verteileinheit ermöglicht somit eine zeitliche und räumliche Entkopplung des Behälterzulaufs vom Behälterauslauf, also des Zustroms einzelner Behälter von deren Verteilung auf die Inspektionseinheiten. Hierbei ermöglichen die insbesondere rasterförmig angeordneten Speicherbereiche eine zuverlässige Zuordnung einer zulaufenden Abfolge von Behälter zu den dafür vorgesehenen Inspektionen. Das heißt Behälter können frei wählbar in einzelnen Speicherbereichen für eine vorgegebene Zeit zwischengespeichert und dort für ein bedarfsabhängiges Ausspeichern zuverlässig wieder aufgefunden werden.

Die Behälter können zu einem für die jeweilige Inspektion geeigneten Zeitpunkt ausgespeichert und zur zugeordneten Inspektionseinheit geleitet werden. Beispielsweise kann die Reihenfolge des Ausspeicherns beliebig von der Reihenfolge des Einspeicherns abweichen. Insbesondere sind unterschiedlich lange Wartezeiten der Behälter je nach Auslastung und Verfügbarkeit einzelner Inspektionseinheiten möglich und somit eine Optimierung der Auslastung der Inspektionseinheiten insgesamt.

Die Inspektionseinheiten sind insbesondere Offline-Inspektionseinheiten zur Inspektion stichprobenartig aus einem Produktstrom ausgeleiteter Behälter unter Laborbedingungen. Im Unterschied dazu werden alle Behälter eines bestimmten Produktstroms durch entsprechend schneller arbeitenden Inline-Inspektionseinheiten geleitet.

Vorzugsweise ist die Steuerung zum Einspeichern auf der Grundlage eines elektronisch abgelegten Stichprobenplans ausgebildet. Der Stichprobenplan richtet sich beispielsweise nach der Anzahl zu überwachender Behandlungsorgane, wie beispielsweise Füllorgane, Verschlussorgane oder dergleichen, Chargengrößen, Chargenwechsel oder dergleichen. Der Inspektionsplan richtet sich beispielsweise nach der Kapazität der

Inspektionseinheiten und dem Zeitbedarf für einzelne Inspektionen und kann die Verfügbarkeit einzelner Inspektionseinheiten berücksichtigen oder dergleichen.

Zeitliche Abläufe, die durch den Stichprobenplan und den Inspektionsplan vorgegeben sind, können somit voneinander entkoppelt werden. Die Produktionskontrolle kann entsprechend flexibler optimiert werden. Dies wird durch die Zwischenspeicherung der Behälter in der Speicher- und Verteileinheit ermöglicht.

Vorzugsweise umfasst der Behälterzulauf ein Transportband für die sukzessive Bereitstellung der Behälter, insbesondere in einer Reihenfolge gemäß einem elektronisch abgelegten Stichprobenplan. Die Behälter können auf dem Transportband gegebenenfalls ruhen und/oder taktweise und/oder mit vergleichsweise geringer Transportgeschwindigkeit, wie beispielsweise mit höchstens 0,5 m/s, vorgeschoben werden, so dass sie von dem Roboter einzeln aufgenommen und jeweils in einen der Speicherbereiche übergeben werden können.

Besonders bevorzugt kann der Roboter mit einem Greifer ausgestattet sein, der es erlaubt mehrere Behälter gleichzeitig vom Transportband in die Speichereinheit zu überführen. Der Greifer kann linear ausgebildet sein und beispielsweise zwei, vier oder acht Behälter gleichzeitig greifen und/oder bewegen.

Vorzugsweise umfasst der Speicher wenigstens acht Speicherbereiche, insbesondere wenigstens 16 Speicherbereiche. Dies ermöglicht eine entsprechend flexible Zwischenspeicherung der Behälter, gegebenenfalls auch über einen längeren Zeitraum. Die Speicherbereiche können an den Bodenquerschnitt des zu inspizierenden Behältertyps gezielt angepasst oder für die Aufnahme unterschiedlich großer Behälter ausgelegt sein.

Vorzugsweise umfasst der Speicher wenigstens einen austauschbaren Speichereinsatz zur Bereitstellung der Speicherbereiche, wobei die Steuerung dann zum Abspeichern und gezielten Abrufen eines von dem wenigstens einen Speichereinsatz bzw. den Speicherbereichen gebildeten Speicherrasters ausgebildet ist. Die Anzahl der Speicherbereiche und/oder deren Speicherflächen bzw. Zellengrößen kann somit verändert werden und damit an die zu verarbeitenden Behälterdimensionen angepasst werden.

Insbesondere sind in der Steuerung des Roboters verschiedene Speicherraster abrufbar hinterlegt. Der Speicher kann beispielsweise eine oder mehrere Getränkekisten umfassen oder einen oder mehrere dergleichen austauschbare Speichereinsätze. Alternativ könnte der Speicher auch eine durchgehende Speicherfläche aufweisen, die durch programmierte Steuerung des Roboters lediglich funktional in einzelne Speicherbereiche unterteilt ist.

Die Speichereinheit kann bevorzugt ein Paternosterlager sein. Dessen Speicherzellen können auf den größten zu verarbeitenden Behälterdurchmesser ausgelegt sein. Besonders bevorzugt ist der Aufnahmequerschnitt der Speicherzellen, beispielsweise im Sinne einer Liegefläche für die Behälter, rund bzw. halbrund welches bei runden Behälterquerschnitten ein automatisches Zentrieren bewirkt. Damit gestaltet sich die Entnahme der Behälter besonders einfach.

Die Steuerung des Roboters basiert vorzugsweise auf dem jeweils vorgegebenen Speicherraster. Folglich lässt sich die Speicher- und Verteileinheit flexibel an unterschiedliche Behältertypen anpassen. Die Handhabung der Behälter beim Einspeichern und Ausspeichern erfolgt vorzugsweise im Halsbereich und/oder am Verschluss der Behälter.

Vorzugsweise umfasst der Behälterauslauf wenigstens ein Transportband oder dergleichen Transportweg zum Anschluss an eine Inspektionseinheit.

Besonders vorteilhaft befinden sich im Anschluss an die Speichereinheit wenigstens zwei insbesondere unterschiedliche Inspektionseinheiten. Dies ermöglicht einen parallelen Inspektionsbetrieb und eine besonders effiziente Inspektion bei der Durchführung von Inspektionen mit unterschiedlichem Zeitbedarf pro Behälter.

Beispielsweise können mehrere parallel geschaltete Transportwege zu den Inspektionseinheiten führen oder ein Transportweg, beispielsweise in Form eines Lineartransporteurs, zu mehreren parallel geschalteten Inspektionseinheiten führen. Ein Lineartransporteur kann zu diesem Zweck an den Eingängen mehrerer Inspektionseinheiten entlang führen. Der Lineartransporteur hat vorzugsweise zwei einander entgegengesetzte (vor/zurück) Laufrichtungen, in denen man die Behälter in flexibler Reihenfolge zu den Eingängen bestimmter Inspektionseinheiten fahren kann.

Es ist beispielsweise denkbar, einem der parallel geschalteten Transportwege eine Inspektionseinheit mit vergleichsweise langer Inspektionsdauer pro Behälter zuzuordnen und einem anderen parallel geschalteten Transportweg zwei seriell geschaltete Inspektionseinheiten mit vergleichsweise kurzer Inspektionsdauer pro Behälter. Dies ermöglicht eine insgesamt zeitsparende und leistungssteigernde Inspektion im Ausleitstrang.

Die gestellte Aufgabe wird ebenso mit einer Behälterabfüllanlage gelöst, die eine Speicher- und Verteileinheit gemäß einer der vorigen Ausführungsformen umfasst sowie stromabwärts davon zugeordnete Inspektionseinheiten zur Überprüfung der Behälter und/oder eines in die Behältern abgefüllten Füllguts durch Messung eines Brix-Werts des Füllguts, eines CO₂-Gehalts des Füllguts, einer Diät-Konzentration des Füllguts, der Stammwürze eines Füllguts, des Alkoholgehaltes, des Mischungsverhältnisses eines Produktes, eines Gewichts der Behälter und/oder einer Verschlusskraft der Behälter.

Derartige Inspektionseinheiten lassen sich dann auf flexible Weise stromabwärts der Speicher- und Verteileinheit sowohl parallel als auch seriell anordnen. Die Speicher- und Verteileinheit ermöglicht eine effiziente Verteilung der Behälter auf einzelne Transportwege und/oder Inspektionseinheiten. Hierbei lässt sich die Reihenfolge, in der die Behälter zu den Inspektionseinheiten ausgespeichert werden, unabhängig von der Reihenfolge der Einspeicherung und der Dauer der Zwischenspeicherung einzelner Behälter steuern.

Vorzugsweise sind die Speicher- und Verteileinheit sowie die Inspektionseinheiten dann in einem von der Abfülllinie räumlich getrennten Laborbereich in einer Schutzatmosphäre angeordnet. Es handelt sich dabei im Wesentlichen um einen für die Inspektion geeigneten Reinraum oder dergleichen. Dies wird dadurch begünstigt, dass der Ausleitstrang von der Abfülllinie weggeführt werden kann, um die nötige räumliche und atmosphärische Trennung zwischen der Abfülllinie und dem Laborbereich herzustellen.

Die gestellte Aufgabe wird ebenso mit einem Verfahren gemäß Anspruch 12 gelöst. Demnach dient dieses zum Speichern und Verteilen befüllter Behälter in einer Behälterabfüllanlage und umfasst folgende Schritte: a) Bereitstellen von aus einer Abfülllinie ausgeleiten Behältern; b) maschinelles Einspeichern von Behältern in einen Speicher mit insbesondere rasterförmig verteilten Speicherbereichen für einzelne Behälter; und c) maschinelles Ausspeichern und Weiterleiten der Behälter zu Inspektionseinheiten. Dabei erfolgt das Ausspeichern der Behälter mittels programmierter Steuerung sowohl selektiv als auch unabhängig vom Zeitpunkt und/oder der Reihenfolge des Einspeicherns der Behälter.

Erfindungsgemäß werden die Behälter beim Einspeichern in je einen Speicherbereich und beim Ausspeichern aus je einem Speicherbereich einzeln durch Greifen ihres Hals- und/oder Verschlussbereichs von wenigstens einem Roboter gehandhabt und einem elektronisch abgelegten Inspektionsplan folgend ausgespeichert, wobei sich der Inspektionsplan nach der Kapazität der Inspektionseinheiten und dem Zeitbedarf für einzelne Inspektionen richtet und/oder die Verfügbarkeit der einzelnen Inspektionseinheiten berücksichtigt.

Damit lassen sich die bezüglich des Anspruchs 1 beschriebenen Vorteile erzielen.

Vorzugsweise werden die Behälter einem elektronisch abgelegtem Stichprobenplan und/oder Inspektionsplan folgend zur Inspektion einer bestimmten Behälteranzahl pro Zeiteinheit, pro Produktionscharge und/oder pro Anzahl abgefüllter Behälter eingespeichert und/oder ausgespeichert. Stichprobenplan und Inspektionsplan lassen sich durch Zwischenspeicherung der Behälter in den einzelnen Speicherbereichen bei gleichzeitiger zuverlässiger Zuordnung der Behälter zu einzelnen Inspektionen und Inspektionseinheiten zeitlich voneinander entkoppeln und somit jeweils optimieren.

Vorzugsweise werden die Behälter gemäß einem elektronisch abgelegten Stichprobenplan gezielt aus der Abfülllinie ausgeleitet und mit elektronischer Kennzeichnung am Speicher bereitgestellt und dort eingespeichert. Darunter ist zu verstehen, dass die Steuereinheit das Ausleiten eines Behälters oder einer Gruppe von Behältern planmäßig anfordert. Die elektronische Kennzeichnung identifiziert den/die Behälter während der Zwischenspeicherung und ermöglicht eine Rückverfolgung bis zum Ausspeichern für die nachfolgende Inspektion. Dies ermöglicht eine zuverlässige Zuordnung von Inspektionsergebnissen zu Behandlungsergebnissen und den dafür in der Behälterabfüllanlage verwendeten Behandlungsorganen, wie beispielsweise Füllorganen oder Verschlussorganen.

Vorzugsweise werden beim Einspeichern der Behälter Informationen zur Identifikation der Behälter, beispielsweise des Füllguts und/oder der Produktcharge, Zeitstempel, zugeordnete Füllorgannummern, Verschlussorgannummern und/oder zugeordnete Bearbeitungsorgannummern abgelegt und dem dabei belegten Speicherbereich und/oder dem eingespeicherten Behälter zugeordnet. Dies ermöglich eine umfassende Zuordnung der dem Behälter zugeordneten Daten zu den am Behälter gewonnenen Inspektionsergebnissen, beispielsweise für eine statistische Auswertung der Inspektionsergebnisse.

Vorzugsweise werden die Behälter gemäß der Verfügbarkeit zugeordneter Inspektionseinheiten ausgespeichert. Der Inspektionsplan gibt beispielsweise die Leistung einzelner Inspektionseinheiten, Prioritäten in der zeitlichen Abarbeitung, vorgeschriebene oder zulässige Ruhezeiten der Behälter, Instandhaltungsbedarf einzelner Inspektionseinheiten, wie beispielsweise Bedarf für Hilfsmittel, oder dergleichen wieder. Das Ausspeichern kann beispielsweise bei einer Fehlfunktion oder anderweitiger Nichtverfügbarkeit einer Inspektionseinheit zunächst verschoben werden und der Behälter bis zu deren Verfügbarkeit in der Speicher- und Verteileinheit warten.

Vorzugsweise werden die Behälter beim Ausspeichern auf parallel geschaltete Transportwege und/oder Inspektionseinheiten verteilt. Dies ermöglicht eine flexible Abarbeitung einzelner Inspektionsaufgaben entsprechend der Kapazität einzelner Inspektionseinheiten und dem Zeitbedarf für die Inspektion.

Vorzugsweise dient das Verfahren ferner zur Inspektion der Behälter und/oder eines in den Behältern vorhandenen Füllguts und umfasst einen Schritt d), indem ein Brix-Wert des Füllguts, ein CO2-Gehalt des Füllguts, eine Diät-Konzentration des Füllguts, ein Gewicht der Behälter und/oder eine Verschlusskraft der Behälter gemessen wird.

Vorzugsweise werden wenigstens zwei unterschiedliche Inspektionen an unterschiedlichen Behältern zeitlich überlappend vorgenommen. Dies ist insbesondere im Zusammenhang mit einer Verteilung der Behälter auf parallel geschaltete Transportwege zur Erhöhung der Inspektionsleistung einfach zu realisieren und flexibel anpassbar.

Ferner kann die Abfülllinie während der Zwischenspeicherung der Behälter in der Speicher- und Verteileinheit auf ein anderes Produkt und/oder Produktionsprogramm umgestellt werden.

Vorteilhaft für sich genommen oder in Kombination mit wenigsten einer der voranstehend beschriebenen Ausführungsformen ist eine Verteileinheit bei der wenigstens ein Entsorgungsspeicher und/oder Entsorgungstransporteur vorhanden ist, und bei der der Roboter zum selektiven Verteilen insbesondere als fehlerhaft markierter Behälter zum Entsorgungsspeicher/ -transporteur ausgebildet ist. Fehlerhaften Behältern wird dann beispielsweise eine die Behälter auf ihrem weiteren Weg begleitende elektronische Marke zugeordnet.

Dies ermöglicht eine insgesamt kompakte Bauweise und gegebenenfalls eine Nachrüstung bestehender Abfüllanlagen, da Behälter zu verschiedenen Zwecken auf einem gemeinsamen Ausleitstrang ausgeleitet und von dort zielgerichtet inspiziert oder entsorgt werden können. Beim Einspeichern in den Entsorgungsspeicher können fehlerhafte Behälter im Prinzip wie zuvor beschrieben gehandhabt werden, insbesondere auf gleichermaßen schonende Weise. Dadurch kann beispielsweise vermieden werden, dass gefüllte aber nicht ordnungsgemäß verschlossene Behälter aufgrund starker mechanischer Erschütterung aufschäumen, das abgefüllte Produkt gegebenenfalls in Fontänen austritt und Verschmutzungen verursacht. Auch der Entsorgungsspeicher kann Speicherbereiche für einzelne Behälter umfassen. Dies ist jedoch ebenso wenig nötig wie eine Zuordnung der zu entsorgenden Behälter zu bestimmten Speicherbereichen des Entsorgungsspeichers. Der Entsorgungstransporteur kann fehlerhafte Behälter beispielsweise an den Inspektionseinheiten vorbei und in ein geeignetes Abfallbehältnis leiten, das an geeigneter Stelle angeordnet und gegebenenfalls mit einem Spritzwasserschutz nach außen hin ausgerüstet ist.

Vorzugsweise werden im Schritt a) ferner von der einer Abfülllinie ausgeleitete fehlerhafte Behältern bereitgestellt werden und diese im Schritt b) in einen separaten Entsorgungsspeicher maschinell eingespeichert und/oder auf einem Entsorgungstransporteur maschinell platziert, wobei der Entsorgungstransporteur insbesondere bis zu einem Abfallbehältnis für fehlerhafte und/oder offline inspizierte Behälter führt.

Zur Problemlösung dient ferner für sich genommen, oder in Kombination mit einer Verteileinheit gemäß wenigsten einer der voranstehend beschriebenen Ausführungsformen, eine Behälterabfüllanlage mit einer Rückkopplungseinrichtung zur Datenrückkopplung von wenigstens einer Offline-Inspektionseinheit für Behälter, die an einen von einem Hauptproduktstrang einer Abfülllinie abzweigenden Ausleitstrang für die Behälter angeschlossenen ist, zu wenigstens einer stromaufwärts des Ausleitstrangs ausgebildeten Inline-Inspektionseinheit für die Behälter. Hierbei ist auch ein bidirektionaler Datenaustausch möglich.

Rückgekoppelte Offline-Inspektionseinheit und Inline-Inspektionseinheit sind dann insbesondere für denselben Inspektionstyp eingerichtet.

Vorzugsweise ist eine Verteileinrichtung vorhanden, die einen zuvor mit der Inline-Inspektionseinheit inspizierten Behälter gezielt zur zugehörigen Offline-Inspektionseinheit leiten kann.

Dies ermöglicht eine Wechselwirkung zwischen einander entsprechenden Offline-Messungen und Inline-Messungen, beispielsweise um letztere zu kalibrieren, einzustellen oder dergleichen. Auch können Qualitätskriterien besser eingehalten werden, beispielsweise indem man sich einer Soll-Füllhöhe und/oder einem Soll-Gewicht durch wiederholte Rücckopplung zunehmend annähert.

Die Rückkopplungseinrichtung ist insbesondere ein drahtgebundener oder drahtloser Datenübertragungsweg, insbesondere zur Übertragung von Messdaten und/oder Kalibrierungsdaten zur Inline-Inspektionseinheit.

Dadurch kann beispielsweise eine Inline-Füllhöhenkontrolle mit einer der Offline-Inspektionseinheiten überwacht und/oder kalibriert werden. Beispielsweise wird ein Behälter zuerst inline inspiziert und derselbe Behälter danach offline inspiziert.

Eine bestimmte Messung ist in einer der an den Behälterauslauf angeschlossenen Offline-Inspektionseinheiten in der Regel genauer als eine entsprechende Messung in einer entsprechenden Inline-Inspektionseinheit, da offline beispielsweise mehr Zeit für die Messung zur Verfügung steht und/oder die verwendeten Messgeräte nicht in den vergleichsweise rauen Produktionsbedingung einer Inline-Messung ausgesetzt sind. Folglich kann die Sensitivität vergleichbarer Inspektionen offline höher sein als inline.

Zudem können offline amtlich zertifizierte und/oder geeichte Laborgeräte verwendet werden.

Bevorzugte Ausführungsformen sind in den Zeichnungen dargestellt. Es zeigen:
Fig. 1 eine schematische Draufsicht auf eine Behälterabfüllanlage mit der Speicher- und Verteileinheit und mit zugeordneten Inspektionseinheiten; und
Fig. 2 eine schematische Draufsicht auf eine Behälterabfüllanlage mit alternativer Speicher- und Verteileinheit und Inspektionseinheiten.

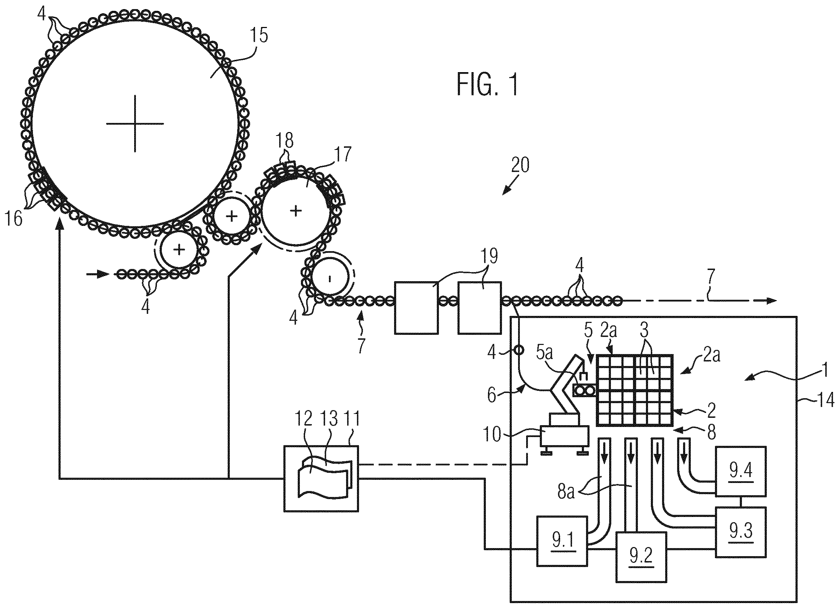

Wie die Fig. 1 erkennen lässt, umfasst die Speicher- und Verteileinheit 1 einen Speicher 2 mit mehreren, vorzugsweise rasterförmig verteilten Speicherbereichen 3 für einzelne Behälter 4. Die Speicherbereiche 3 können von wenigstens einem austauschbaren Speichereinsatz 2a, wie beispielsweise von den Fächern einer Getränkekiste, gebildet werden. In der Figur sind beispielhaft vier aneinander angeordnete Speichereinsätze 2a mit je neun Speicherbereichen 3 schematisch dargestellt. Anzahl und Größe der Speicherbereiche 3 können somit auf flexible und einfache Weise an den Behälterquerschnitt angepasst werden.

Der Speicher 2 kann auch als Paternosterlager mit funktional entsprechenden Speicherbereichen 3 zur Ablage der Behälter 4 ausgebildet sein.

Der Speicher 2 umfasst einen Behälterzulauf 5 zum Anschluss des Speichers 2 an einen Ausleitstrang 6, der zum stichprobenartigen Ausleiten einzelner Behälter 4 von einem Hauptproduktstrang einer Abfülllinie 7 abzweigt. Der Speicher 2 umfass ferner einen Behälterauslauf 8 mit vorzugsweise mehreren und insbesondere parallel beschickbaren Transportwegen 8a zum Anschluss des Speichers 2 an Inspektionseinheiten 9.1, 9.2, 9.3, 9.4.

Die Inspektionseinheiten 9.1, 9.2, 9.3, 9.4 dienen der Offline-Inspektion der Behälter 2 und/oder des darin enthaltenen Füllguts und können in prinzipiell beliebiger Anzahl parallel und/oder seriell geschaltet werden. Entsprechend ist die Anzahl der dargestellten Transportwege 8a lediglich beispielhaft.

Die Speicher- und Verteileinheit 1 umfasst ferner wenigstens einen Roboter 10, der in der Figur lediglich der Anschaulichkeit halber in einer seitlichen Ansicht dargestellt ist. Der wenigstens eine Roboter 10 dient der Handhabung einzelner Behälter 4, insbesondere durch Greifen ihres Hals- und/oder Verschlussbereichs, beim Einspeichern in je einen und beim Ausspeichern aus je einem Speicherbereich 3 des Speichers 2. Prinzipiell wären zum Einspeichern und Ausspeichern auch mehrere miteinander koordinierte Roboter 10 möglich.

Der Roboter 10 ergreift die Behälter 4 am Behälterzulauf 5, der an den Ausleitstrang 6 angeschlossen ist und ein eingangsseitiges und vorzugsweise taktweise angetriebenes Förderband 5a umfassen kann. Auf diesem werden die Behälter 4 nacheinander bereitgestellt, gegebenenfalls bei der Übergabe an den Roboter 10 ruhend.

Der Roboter 10 wird von einer programmierbaren Steuerung 11 zum selektiven Ausspeichern einzelner Behälter 4 angewiesen, und zwar im Wesentlichen unabhängig von Zeitpunkten und/oder der Reihenfolge des Einspeicherns. Der Roboter 10 ergreift die Behälter 4 im jeweils belegten Speicherbereich 3 und setzt die Behälter 4 einzeln am Behälterauslauf 8 ab, insbesondere auf einem der parallel geschalteten Transportwege 8a.

Die Bewegungsabläufe des Roboters 10 beim Einspeichern durch Übergabe der Behälter 4 vom Behälterzulauf 5 an den Speicher 2 und die Bewegungsabläufe zum Ausspeichern der Behälter 4 von den Speicherbereichen 3 zum Behälterauslauf 8 sind durch wenigstens einmaliges Absetzen der Behälter 4 in den Speicherbereichen 3 voneinander getrennt. Ein Umsetzen der Behälter 4 im Speicher 2 ist zusätzlich möglich. Das Ausspeichern einzelner Behälter 4 ist somit in variabel vorgebbarer Reihenfolge möglich.

Vorzugseise sind in der Steuerung 11 des Roboters 10 verschiedene Speicherraster des Speichers 2 abrufbar hinterlegt. Jedes Speicherraster gibt eine zweidimensionale Verteilung der verwendeten Speicherbereiche 3 wieder, die beispielsweise durch eine geeignete Kombination und Anordnung von Speichereinsätzen 2a vorgegeben sind. Hierzu eignen sich in besonderem Maße zu den Behältern 4 passende Getränkekisten.

Je nach Funktionsweise des Roboters 10 und Standfestigkeit der Behälter 4 könnte der Speicher 2 jedoch prinzipiell auch eine durchgehende Speicherfläche ohne Trennwände oder dergleichen aufweisen (nicht dargestellt), die durch die programmierte Steuerung 11 des Roboters 10 lediglich funktional in virtuelle Speicherbereiche 3 unterteilt ist.

Das Einspeichern erfolgt gemäß einem festgelegten und vorzugsweise in der Steuerung 11 gespeicherten Stichprobenplan 12. Das Ausspeichern kann dann je nach Verfügbarkeit und/oder Kapazität einzelner Inspektionseinheiten 9.1, 9.2, 9.3, 9.4 erfolgen und/oder gemäß einem vorzugsweise in der Steuerung 11 gespeicherten Inspektionsplan 13. Dieser kann Inspektionsvorschriften umfassen, wie beispielsweise zur gruppenweisen Inspektion bestimmter Behälter 4, beispielsweise solchen mit identischem Füllgut, ebenso Information zu maximal zulässigen oder mindestens erforderlichen Ruhezeiten der Behälter 4 im Speicher 2 oder dergleichen.

Die Speicher- und Verteileinheit 1 sowie die Inspektionseinheiten 9.1, 9.2, 9.3, 9.4 sind vorzugsweise in einem räumlich von der Abfülllinie 7 getrennten Laborbereich 14 angeordnet, beispielsweise in einem Reinraum mit geeigneter Schutzatmosphäre für die Inspektionen.

Der Vollständigkeit halber dargestellt sind ferner eine an sich bekannte Füllmaschine 15 mit Füllorganen 16 zum Befüllen der Behälter 4 mit einem flüssigen Füllgut, eine an sich bekannte Verschließmaschine 17 mit Verschlussorganen 18 zum Verschließen der zuvor befüllten Behälter 4, sowie von allen Behältern 4 im Bereich der Abfülllinie 7 durchlaufene Inline-Inspektionseinheiten 19. Diese Komponenten sind ebenso Bestandteil einer Behälterabfüllanlage 20 wie die Speicher- und Verteileinheit 1 und die offline angeordneten Inspektionseinheiten 9.1, 9.2, 9.3, 9.4.

In geeigneter Weise kann sich der Bereich der Schutzatmosphäre auch von einer Blasmaschine (nicht dargestellt), der Füllmaschine 15 und/oder der Verschließmaschine 17 bis zum Laborbereich 14 bzw. bis zur Verteileinheit 1 und den Inspektionseinheiten 9.1, 9.2, 9.3, 9.4 erstrecken.

Mit der Speicher- und Verteileinheit 1 kann beispielsweise wie folgt gearbeitet werden:
Die Behälter 4 werden entlang der Abfülllinie 7 als kontinuierlich transportierter Produktstrom in der Füllmaschine 15 mittels der Füllorgane 16 mit einem flüssigen Füllgut, beispielsweise einem Getränk, befüllt. Anschließend werden die befüllten Behälter 4 auf bekannte Weise der Verschließmaschine 17 zugeführt und dort ebenso als kontinuierlich transportierter Produktstrom mittels der Verschlussorgane 18 mit Schraubverschlüssen oder dergleichen verschlossen.

Alle befüllten und verschlossenen Behälter 4 werden anschließend entlang der Abfülllinie 7 durch optional vorhandene Inline-Inspektionseinheiten 19 geleitet und dort beispielsweise bildgebend untersucht oder dergleichen. Stromabwärts davon werden einzelne Behälter 4 stichprobenartig aus der Abfülllinie 7 auf an sich bekannte Weise gezielt ausgeschleust und auf den Ausleitstrang 6 geleitet. Die nacheinander stichprobenartig ausgeleiteten Behälter 4 sind dann im Bereich des Behälterzulaufs 5, beispielsweise einreihig auf dem Förderband 5a stehend, bereit zum Einspeichern in den Speicher 2.

Das Ausleiten der Behälter 4 aus dem Hauptproduktstrang und das sukzessive Zuführen der Behälter 4 zur Speicher- und Verteileinheit 1 erfolgt vorzugsweise auf Befehl der Steuerung 11 oder dergleichen zentral gesteuert nach einem zuvor festgelegten Stichprobenplan 12.

Dieser dient beispielsweise der Funktionskontrolle der Füllorgane 16 und der Verschlussorgane 18 und beinhaltet wenigstens Anlass und Anzahl der offline zu inspizierenden Behälter 4 und die Art der auszuführenden Inspektionen.

Den ausgeleiteten Behältern 4 werden beispielsweise Daten zur Identifikation einzelner Behälter 4, der zugehörigen Produktcharge, des eingefüllten Füllguts und/oder eine Kennung des zur Füllung des jeweiligen Behälters 4 verwendeten Füllorgans 16 und/oder eine Kennung des zum Verschließen des jeweiligen Behälters 4 verwendeten Verschlussorgans 18 zugeordnet. Ferner kann jedem Behälter 4 ein Zeitstempel der Stichprobe und/oder des Einspeicherns zugeordnet werden.

Beim Einspeichern wird den Behältern 4 jeweils ein Speicherbereich 3 zugeordnet. Somit sind Identität und Herkunft der eingespeicherten Behälter 4 ebenso bekannt wie der jeweils belegte Speicherbereich 3, also der Ort der Zwischenspeicherung, und gegebenenfalls auch die Verweildauer des jeweiligen Behälters 4 im Speicher 2.

Zur Abarbeitung der aus dem Stichprobenplan 12 folgenden Inspektionen werden die Behälter 4 auf der Grundlage des Inspektionsplans 13 und/oder anderweitiger Inspektionsvorschriften aus ihren Speicherbereichen 3 ausgespeichert und zu einer der Inspektionseinheiten 9.1, 9.2, 9.3, 9.4 weitergeleitet. Der Befehl zum Ausspeichern kann beispielsweise von der Steuerung 11 bei Verfügbarkeit einer bestimmten Inspektionseinheit 9.1, 9.2, 9.3, 9.4 ausgelöst werden oder bei Ablauf einer vorgegebenen oder zulässigen Wartezeit des Behälters 4 im Speicher 2.

Da die Behälter 4 in den Speicherbereichen 3 eindeutig lokalisiert sind, können alle zugehörigen Stichprobendaten auch nach der Verteilung der Behälter 4 auf die parallel geschalteten Transportwege 8a und die daran angeschlossenen Inspektionseinheiten 9.1, 9.2, 9.3, 9.4 den an den Behältern 4 gewonnenen Inspektionsergebnissen zuverlässig zugeordnet werden.

Die zeitliche Entkopplung der Stichproben und Inspektionen mittels des Speichers 2 ermöglicht beispielsweise eine Umstellung der Abfülllinie 7 auf ein neues Produkt und/oder Produktionsprogramm, während die mit dem bereits abgearbeiteten Produktionsprogramm behandelten und ausgeleiteten Behälter 4 in den Speicherbereichen 3 noch auf ihre Inspektionen warten.

Mit den Inspektionseinheiten 9.1, 9.2, 9.3, 9.4, deren Anzahl und ausschließliche Parallelschaltung lediglich beispielhaft ist, können im Grunde genommen beliebige Offline-Inspektionen an den Behältern 4 und/oder am eingefüllten Füllgut vorgenommen werden, beispielsweise die Messung eines Brix-Werts des Füllguts, eines CO₂-Gehalts des Füllguts, einer Diät-Konzentration des Füllguts, eines Gewichts der Behälter (Füllmenge) und/oder eine Verschlusskraft der an den Behältern 4 mit der Verschließmaschine 17 angebrachten Verschlusskappen oder dergleichen.

Derartige Inspektionen können sowohl nacheinander als auch parallel und zeitlich überlappend ausgeführt werden. Dies wird insbesondere durch die Verteilung der Behälter 4 beim Ausspeichern auf parallel geschaltete Transportwege 8a ermöglicht. Die Behälter 4 werden dann vorzugsweise derart auf die Transportwege 8a verteilt, dass die Inspektionseinheiten 9.1, 9.2, 9.3, 9.4 zeitlich möglichst gleichmäßig ausgelastet werden und somit eine Inspektionsleistung der Inspektionseinheiten insgesamt optimiert wird.

Die Messdaten der Inspektionseinheiten 9.1, 9.2, 9.3, 9.4 werden beispielsweise der Steuerung 11 oder einer anderen dafür geeigneten Recheneinheit zur statistischen Auswertung zugeführt. Aus den Messdaten lassen sich dann beispielsweise für die Qualitätssicherung relevante Parameter ableiten, wie beispielsweise Minimalwerte, Maximalwerte, Standardabweichungen und Prozessfähigkeitsindizes Cp, CpK oder dergleichen.

Der Stichprobenplan 12 kann beispielsweise Probennahmen in regelmäßigen Zeitabständen erfordern und/oder pro Produktionseinheit, beispielsweise eine bestimmte Anzahl Behälter 4 pro Charge. Derartige Stichprobennahmen eignen sich insbesondere für Kontrollmessungen des Brix-Werts, des CO₂-Werts und/oder einer Diät-Konzentration des eingefüllten Füllguts.

Stichproben zur Kontrolle von Behandlungsorganen, wie beispielsweise den Füllorganen 16 und den Verschlussorganen 18, werden vorzugsweise in regelmäßigen zeitlichen Abständen für sämtliche Behandlungsorgane genommen.

Je nach Anzahl der jeweils ausgeleiteten Behälter 4 erfolgt die Inspektion in den Inspektionseinheiten 9.1, 9.2, 9.3, 9.4 vorzugsweise zerstörungsfrei, so dass die inspizierten Behälter 4 anschließend wieder in den Hauptproduktstrang der Abfülllinie 7 zur weiteren Verarbeitung zurückgeleitet werden können (nicht dargestellt).

Auf der Grundlage der oben genannten Anforderungen für Stichproben und Inspektionen wird vorzugsweise für jedes Produktionsprogramm bzw. Produkt ein Stichprobenplan 12 und gegebenenfalls ein zugeordneter Inspektionsplan 13 erstellt und elektronisch abgelegt.

Nach Aktivierung des jeweiligen Stichprobenplans 12 wird das Ausleiten und Einspeichern der Behälter 4 zentral gesteuert, beispielsweise mit der Steuerung 11. Hierbei werden jedem ausgeleiteten Behälter 4 eine zurück verfolgbare Identifizierung und gegebenenfalls Daten zu den verwendeten Füllorganen 16, Verschlussorgan 18 oder dergleichen zugeordnet.

Das Zwischenspeichern, Ausspeichern und Weiterleiten zu den Inspektionseinheiten 9.1, 9.2, 9.3, 9.4 kann dann je nach deren Kapazität und Verfügbarkeit und/oder nach den Kriterien eines daran angepassten Inspektionsplans 13 erfolgen.

Somit ist je nach Größe des Speichers 2, also der Anzahl der einzelnen Speicherbereiche 3 eine geeignete Entkopplung der Inspektionen von der zugehörigen Stichproben-Entnahme möglich. Hierbei können beim Zwischenspeichern besondere Anforderungen an die Inspektion der Behälter 4 berücksichtigt werden, beispielsweise bestimmte Verteilungsmuster auf die Inspektionseinheiten 9.1, 9.2, 9.3, 9.4 und/oder Einhalten bestimmter Ruhezeiten oder zulässiger Speicherzeiten der Behälter 4 vor der jeweiligen Inspektion oder dergleichen.

Somit ermöglicht die Speicher- und Verteileinheit 1 eine besonders flexible und effiziente Produktionskontrolle der Abfüllanlage 20 bei ständiger Rückverfolgbarkeit der zu inspizierenden Behälter 4.

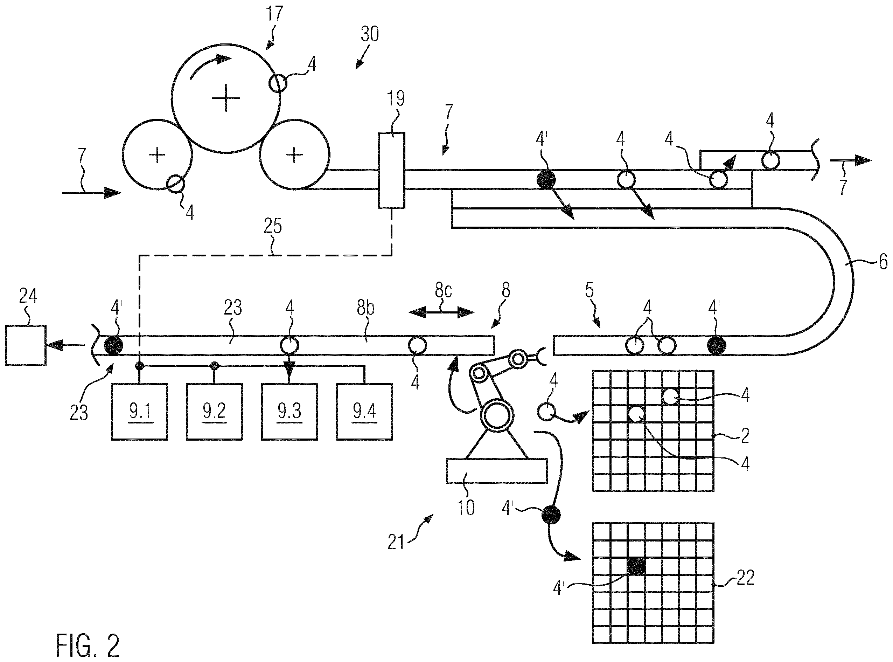

Wie die Figur 2 erkennen lässt, umfasst die Speicher- und Verteileinheit 21 gemäß einer weiteren bevorzugten Ausführungsform ebenso einen Speicher 2 mit mehreren, vorzugsweise rasterförmig verteilten Speicherbereichen 3 für einzelne Behälter 4. Auch hier wäre ein Paternosterlager praktikabel.

Die Verteileinheit 21 umfasst ebenso einen Behälterzulauf 5 zum Anschluss des Speichers 2 an einen Ausleitstrang 6, der zum stichprobenartigen Ausleiten einzelner Behälter 4 von einem Hauptproduktstrang einer Abfülllinie 7 abzweigt.

Zusätzlich werden auf dem Ausleitstrang 6 auch fehlerhafte, insbesondere nicht ordnungsgemäß behandelte Behälter 4' ausgeleitet. Ein nicht ordnungsgemäßer Zustand der Behälter 4', beispielsweise eine zu geringe Füllhöhe und/oder ein unvollständiger / fehlender Verschluss wird in wenigstens einer Inline-Inspektionseinheit 19 stromaufwärts festgestellt. Eine dabei festgestellte Fehlerhaftigkeit begleitet den fehlerhaften Behälter 4' dann als elektronische Marke auf seinem weiteren Weg wenigstens bis zur Verteileinheit 21.

Zusätzlich zur Zwischenspeicherung im Speicher 2 ist zur Entsorgung fehlerhafter Behälter 4' vorzugsweise ein Entsorgungsspeicher 22 vorhanden, wobei der Roboter 10 dann zum selektiven Verteilen fehlerhafter Behälter 4' vom Behälterzulauf 5 zum Entsorgungsspeicher 22 ausgebildet ist.

Dort werden die fehlerhaften Behälter 4' so schonend abgesetzt, dass Verschmutzungen durch überschäumendes Produkt und insbesondere Fontänen vermieden werden. Ein gefüllter Entsorgungsspeicher 22 kann dann auf herkömmliche Weise geleert bzw. gegen einen leeren Entsorgungsspeicher 22 ausgetauscht werden.

An den Speicher 2 schließt ferner ein vom Roboter 10 beschickter Behälterauslauf 8 an mit einem vorzugsweise an den Eingängen mehrerer Inspektionseinheiten 9.1, 9.2, 9.3, 9.4 entlang laufendem Transportweg 8b, der insbesondere ein wahlweise in entgegengesetzten Richtungen 8c laufender Lineartransporteur ist. Damit können die ausgespeicherten Behälter 4 in flexibler Reihenfolge an je eine der Inspektionseinheiten 9.1, 9.2, 9.3, 9.4 gefahren werden.

Der Transportweg 8b kann zudem als Entsorgungstransporteur 23 zu einem Abfallbehältnis 24, beispielsweise einem Container oder dergleichen, eingesetzt werden. Der Roboter 10 ist dann zum selektiven Verteilen fehlerhafter Behälter 4' zum Transportweg 8b bzw. Entsorgungstransporteur 23 ausgebildet ist, insbesondere ohne Zwischenspeicherung. Das heißt, fehlerhafte Behälter 4' werden dann direkt vom Behälterzulauf 5 an den Behälterauslauf 8 übergeben.

Auch von den Inspektionseinheiten 9.1, 9.2, 9.3, 9.4 untersuchte Behälter 4 können auf dem Transportweg 8b bzw. Entsorgungstransporteur 23 zum Abfallbehältnis 24 transportiert werden.

An den Inline-Inspektionseinheiten 19 gewonnene Messdaten werden den untersuchten Behältern 4, insbesondere ihrer jeweiligen Position im Produktstrom und den für ihre Behandlung jeweils verwendeten Füllorganen 16, Verschlussorganen 18 oder dergleichen, elektronisch zugeordnet, um beispielsweise einen ordnungsgemäß gefüllten und verschlossenen Behälter 4 von einem nicht ordnungsgemäß gefüllten und/oder verschlossenen Behälter 4' auf seinem weiteren Weg durch die Behälterabfüllanlage 20, 30 zu unterscheiden.

Diese Messdaten und Zuordnungsinformation begleiten die Behälter 4 beispielsweise auch bis zu den Inspektionseinheiten 9.1, 9.2, 9.3, 9.4, so dass dort offline gewonnene Messdaten beispielsweise zur Einstellung / Kalibrierung der Inline-Inspektionseinheiten 19 verwendet werden können.

Zu diesem Zweck ist vorzugsweise eine Rückkopplungseinrichtung 25 zur Datenrückkopplung von wenigstens einer der an den Behälterauslauf 8 angeschlossenen Inspektionseinheiten 9.1, 9.2, 9.3, 9.4 zu wenigstens einer stromaufwärts des Ausleitstrangs 6 ausgebildeten Inline-Inspektionseinheit 19 vorhanden.

Da es sich bei den Offline-Inspektionseinheiten 9.1, 9.2, 9.3, 9.4 um Laborgeräte handelt und diese unter für die jeweilige Inspektion optimierten Laborbedingungen betrieben werden können, sind die damit gewonnenen Messergebnisse in der Regel genauer als vergleichbare Messergebnisse der Inline-Inspektionseinheiten 19. Letztere können somit anhand der genaueren Ergebnisse der Offline-Inspektionseinheiten 9.1, 9.2, 9.3, 9.4 überprüft, eingestellt und/oder kalibriert werden.

Dadurch lässt sich die Qualität der fortlaufenden Inline-Produktkontrolle anhand der stichprobenartigen Offline-Produktkontrolle sukzessive optimieren.

Die Ausführungsformen gemäß Fig. 1 und 2 sind hinsichtlich der flexiblen Zwischenspeicherung und Verteilung der Behälter 4 auf der Grundlage von Stichprobenplänen 12 und Inspektionsplänen 13 sowie hinsichtlich der zugehörigen Steuerungsfunktionen der Steuerung 11 funktional gleichwertig, so dass einzelne Bestandteile dieser Ausführungsformen gegenseitig ausgetauscht und/oder miteinander kombinierbar sind. Der Einfachheit halber wurde die Steuerung 11 und weitere an sich bekannte Komponenten der Behälterabfüllanlage 30 daher in der Fig. 2 weggelassen.

Auch die bezüglich der Fig. 1 beschriebenen Verfahrensschritte lassen sich uneingeschränkt mit der Ausführungsform gemäß Fig. 2 durchführen.

Zusätzlich ist bei der Fig. 2 eine separate Handhabung fehlerhafter Behälter 4' mit der Verteileinheit 21 möglich. Die Ausführungsform der Fig. 1 ließe sich entsprechend ergänzen.

## Patentansprüche

1. Speicher- und Verteileinheit (1, 21) für eine Behälterabfüllanlage (20, 30), umfassend:
- einen Speicher (2) mit insbesondere rasterförmig verteilten Speicherbereichen (3) für einzelne Behälter (4), mit einem Behälterzulauf (5) zum Anschluss an einen Ausleitstrang (6) einer Abfülllinie (7) und mit einem Behälterauslauf (8) zum Anschluss an Inspektionseinheiten (9.1, 9.2, 9.3, 9.4);
- einen Roboter (10) zum Einspeichern befüllter Behälter (4) durch Übergabe vom Behälterzulauf (5) in die Speicherbereiche (3) sowie zum Ausspeichern der Behälter (4) durch Übergabe von den Speicherbereichen (3) zum Behälterauslauf (8); und
- eine programmierbare Steuerung (11) für den Roboter (10), die zum selektiven Ausspeichern der Behälter (4) unabhängig vom Zeitpunkt und/oder der Reihenfolge ihres Einspeicherns ausgebildet ist,
**dadurch gekennzeichnet, dass** der Roboter (10) zur Handhabung einzelner Behälter (4) durch Greifen ihres Hals- und/oder Verschlussbereichs beim Einspeichern in je einen Speicherbereich (3) und beim Ausspeichern aus je einem Speicherbereich (3) ausgebildet ist und die Steuerung (11) zum Ausspeichern auf der Grundlage eines elektronisch abgelegten Inspektionsplans (13) ausgebildet ist.

2. Speicher- und Verteileinheit nach Anspruch 1, wobei die Steuerung (11) zum Einspeichern auf der Grundlage eines elektronisch abgelegten Stichprobenplans (12) ausgebildet ist.

3. Speicher- und Verteileinheit nach Anspruch 1 oder 2, wobei der Behälterzulauf (5) ein Transportband (5a) für die sukzessive Bereitstellung der Behälter (4), insbesondere in der Reihenfolge eines elektronisch abgelegten Stichprobenplans (12), umfasst.

4. Speicher- und Verteileinheit nach einem der vorigen Ansprüche, wobei der Speicher (2) wenigstens acht Speicherbereiche (3), insbesondere wenigstens 16 Speicherbereiche (3), umfasst.

5. Speicher- und Verteileinheit nach einem der vorigen Ansprüche, wobei der Speicher (2) wenigstens einen austauschbaren Speichereinsatz (2a) zur Bereitstellung der Speicherbereiche (3) umfasst und in der Steuerung (11) ein den derart bereitgestellten Speicherbereichen (3) entsprechendes Speicherraster abrufbar gespeichert ist.

6. Speicher- und Verteileinheit nach einem der vorigen Ansprüche, wobei der Behälterauslauf (8) wenigstens ein Transportband oder dergleichen Transportweg (8a, 8b) zum Anschluss an wenigstens eine Inspektionseinheit (9.1) umfasst.

7. Speicher- und Verteileinheit nach einem der vorigen Ansprüche, wobei der Behälterauslauf (8) wenigstens ein Transportband oder dergleichen Transportweg (8a, 8b) zum Anschluss an wenigstens zwei, insbesondere wenigstens zwei unterschiedliche Inspektionseinheiten (9.1, 9.2, 9.3, 9.4) umfasst.

8. Speicher- und Verteileinheit nach einem der vorigen Ansprüche, wobei ferner ein Entsorgungsspeicher (22) und/oder Entsorgungstransporteur (23) vorhanden ist, und wobei der Roboter (10) zum selektiven Verteilen insbesondere fehlerhafter Behälter (4') zum Entsorgungsspeicher / Entsorgungstransporteur (22, 23) ausgebildet ist.

9. Speicher- und Verteileinheit nach einem der vorigen Ansprüche, wobei ferner eine Rücckopplungseinrichtung (25) zur Datenrückkopplung zwischen wenigstens einer der an den Behälterauslauf (8) angeschlossenen Inspektionseinheiten (9.1, 9.2, 9.3, 9.4) und einer stromaufwärts des Ausleitstrangs (6) ausgebildeten Inline-Inspektionseinheit (19) vorhanden ist.

10. Behälterabfüllanlage (20, 30) mit einer Speicher- und Verteileinheit (1, 21) nach einem der vorigen Ansprüche und mit stromabwärts davon zugeordneten Inspektionseinheiten (9.1, 9.2, 9.3, 9.4) zur Überprüfung der Behälter (4) und/oder eines in den Behältern vorhandenen Füllguts durch Messung eines Brix-Werts des Füllguts, eines CO₂-Gehalts des Füllguts, einer Diät-Konzentration des Füllguts, eines Gewichts der Behälter (4) und/oder einer Verschlusskraft der Behälter (4).

11. Behälterabfüllanlage nach Anspruch 10, wobei die Speicher- und Verteileinheit (1, 21) sowie die Inspektionseinheiten (9.1, 9.2, 9.3, 9.4) in einem von der Abfülllinie (7) räumlich getrennten Laborbereich (14) unter Schutzatmosphäre angeordnet sind.

12. Verfahren zum Speichern und Verteilen befüllter Behälter (4) in einer Behälterabfüllanlage (20, 30), mit den Schritten:
a) Bereitstellen von aus einer Abfülllinie (7) ausgeleiteten Behältern (4);
b) Maschinelles Einspeichern der Behälter (4) in einen Speicher (2) mit insbesondere rasterförmig verteilten Speicherbereichen (3) für einzelne Behälter (4); und
c) Maschinelles Ausspeichern und Weiterleiten der Behälter (4) zu Inspektionseinheiten (9.1, 9.2, 9.3, 9.4),
wobei das Ausspeichern der Behälter (4) mittels programmierter Steuerung (11) selektiv und unabhängig vom Zeitpunkt und/oder der Reihenfolge des Einspeicherns der Behälter (4) erfolgt,
**dadurch gekennzeichnet, dass** die Behälter (4) beim Einspeichern in je einen Speicherbereich (3) und beim Ausspeichern aus je einem Speicherbereich (3) einzeln durch Greifen ihres Hals- und/oder Verschlussbereichs von wenigstens einem Roboter (10) gehandhabt und einem elektronisch abgelegten Inspektionsplan (13) folgend ausgespeichert werden, wobei sich der Inspektionsplan (13) nach der Kapazität der Inspektionseinheiten (9.1, 9.2, 9.3, 9.4) und dem Zeitbedarf für einzelne Inspektionen richtet und/oder die Verfügbarkeit der einzelnen Inspektionseinheiten (9.1, 9.2, 9.3, 9.4) berücksichtigt.

13. Verfahren nach Anspruch 12, wobei die Behälter (4) einem elektronisch abgelegten Stichprobenplan (12) und/oder Inspektionsplan (13) folgend zur Inspektion einer bestimmten Behälteranzahl pro Zeiteinheit, pro Produktionscharge und/oder pro Anzahl abgefüllter Behälter (4) eingespeichert und/oder ausgespeichert werden.

14. Verfahren nach Anspruch 12 oder 13, wobei die Behälter (4) gemäß einem elektronisch abgelegten Stichprobenplan (12) gezielt aus der Abfülllinie (7) ausgeleitet und mit elektronischer Kennzeichnung bereitgestellt und eingespeichert werden.

15. Verfahren nach einem der Ansprüche 12 bis 14, wobei beim Einspeichern der Behälter (4) Informationen zur Identifikation der Behälter (4), des Füllguts und/oder der Produktcharge, Zeitstempel, zugeordnete Füllorgannummern und/oder zugeordnete Verschlussorgannummern abgelegt und dem dabei belegten Speicherbereich (3) zugeordnet werden.

16. Verfahren nach einem der Ansprüche 12 bis 15, wobei die Behälter (4) nach Verfügbarkeit zugeordneter Inspektionseinheiten (9.1, 9.2, 9.3, 9.4) ausgespeichert und dabei insbesondere auf parallel geschaltete Transportwege (8a) und/oder Inspektionseinheiten (9.1, 9.2, 9.3, 9.4) verteilt werden.

17. Verfahren nach einem der Ansprüche 12 bis 16, ferner zur Inspektion der Behälter (4) und/oder eines in den Behältern (4) vorhandenen Füllguts, und mit einem Schritt d), in dem ein Brix-Wert des Füllguts, ein CO₂-Gehalt des Füllguts, eine Diät-Konzentration des Füllguts, ein Gewicht der Behälter (4) und/oder eine Verschlusskraft der Behälter (4) gemessen wird.

18. Verfahren nach Anspruch 17, wobei die Inspektionseinheiten (9.1, 9.2, 9.3, 9.4) wenigstens zwei unterschiedliche Inspektionen an unterschiedlichen Behältern (4) zeitlich überlappend durchführen.

19. Verfahren nach einem der Ansprüche 12 bis 18, wobei im Schritt a) ferner von der einer Abfülllinie (7) ausgeleitete fehlerhafte Behältern (4') bereitgestellt werden und diese im Schritt b) in einen separaten Entsorgungsspeicher (23) maschinell eingespeichert und/oder auf einem Entsorgungstransporteur (23) maschinell platziert werden, wobei der Entsorgungstransporteur (23) insbesondere bis zu einem Abfallbehältnis (24) für fehlerhafte und/oder offline inspizierte Behälter (4', 4) führt.

## Claims

1. A storage and distribution unit (1) for a container filling plant (20, 30), comprising:
- a store (2) comprising storage areas (3) for individual containers (4), the storage areas (3) being especially distributed in a grid pattern, a container feed (5) for connection to a discharge line section (6) of a filling line (7), and a container outlet (8) for connection to inspection units (9.1, 9.2, 9.3, 9.4);
- a robot (10) for putting filled containers (4) into storage by transferring them from the container feed (5) to the storage areas (3) as well as for taking the containers (4) out of storage by transferring them from the storage areas (3) to the container outlet (8); and
- a programmable control unit (11) used for the robot (10) and configured for selectively taking the containers (4) out of storage independently of the moment in time at which and/or the sequence in which they have been put into storage,
**characterized in that** the robot (10) is configured to handle individual containers (4) by taking hold of their neck and/or closure area, when putting them into a respective storage area (3) and when taking them out of a respective storage area (3), and the control unit (11) is configured for taking the containers (4) out of storage on the basis of an electronically stored inspection plan (13).

2. The storage and distribution unit according to claim 1, wherein the control unit (11) is configured for putting the containers (4) into storage on the basis of an electronically stored sampling plan (12).

3. The storage and distribution unit according to claim 1 or 2, wherein the container feed (5) comprises a conveyor belt (5a) for successively providing the containers (4), in particular according to the sequence of an electronically stored sampling plan (12).

4. The storage and distribution unit according to one of the preceding claims, wherein the store (2) comprises at least eight storage areas (3), in particular at least sixteen storage areas (3).

5. The storage and distribution unit according to one of the preceding claims, wherein the store (2) comprises at least one replaceable storage insert (2a) for providing the storage areas (3) and the control unit (11) has retrievably stored therein a storage grid corresponding to the storage areas (3) provided in this way.

6. The storage and distribution unit according to one of the preceding claims, wherein the container outlet (8) comprises at least one conveyor belt or an equivalent transport path (8a, 8b) for connection to at least one inspection unit (9.1).

7. The storage and distribution unit according to one of the preceding claims, wherein the container outlet (8) comprises at least one conveyor belt or an equivalent transport path (8a, 8b) for connection to at least two, in particular at least two different inspection units (9.1, 9.2, 9.3, 9.4).

8. The storage and distribution unit according to one of the preceding claims, wherein a disposal store (22) and/or a disposal conveyor (23) is/are additionally provided, and wherein the robot (10) is configured for selectively distributing in particular faulty containers (4') to the disposal store / disposal conveyor (22, 23).

9. The storage and distribution unit according to one of the preceding claims, wherein a feedback device (25) is additionally provided, which is used for data feedback between at least one of the inspection units (9.1, 9.2, 9.3, 9.4) connected to the container outlet (8) and an inline inspection unit (19) formed upstream of the discharge line section (6).

10. A container filling plant (20, 30), comprising a storage and distribution unit (1, 21) according to one of the preceding claims and inspection units (9.1, 9.2, 9.3, 9.4) assigned thereto downstream and used for checking the containers (4) and/or a filling product contained in the containers, by measuring a Brix value of the filling product, a CO₂ content of the filling product, a diet concentration of the filling product, a weight of the containers (4) and/or a closing force of the containers (4).

11. The container filling plant according to claim 10, wherein the storage and distribution unit (1, 21) as well as the inspection units (9.1, 9.2, 9.3, 9.4) are arranged under a protective atmosphere in a laboratory area (14), which is spatially separated from the filling line (7).

12. A method for storing and distributing containers (4) in a container filling plant (20, 30), comprising the following steps:
a) providing containers (4) discharged from a filling line (7);
b) putting the containers (4) mechanically into a store (2) comprising storage areas (3) for individual containers (4), the storage areas (3) being especially distributed in a grid pattern; and
c) taking the containers (4) mechanically out of storage and forwarding them to inspection units (9.1, 9.2, 9.3, 9.4),
the containers (4) being taken out of storage by means of a programmed control unit (11) selectively and independently of the moment in time at which and/or the sequence in which the containers (4) have been put into storage,
**characterized in that** the containers (4) are individually handled by at least one robot (10) taking hold of their neck and/or closure area, when putting the containers (4) into a respective storage area (3) and when taking them out of a respective storage area (3), and are taken out of storage on the basis of an electronically stored inspection plan (13), wherein the inspection plan (13) is based on the capacity of the inspection units (9.1, 9.2, 9.3, 9.4) and the time required for individual inspections and/or takes into account the availability of the individual inspection units (9.1, 9.2, 9.3, 9.4).

13. The method according to claim 12, wherein the containers (4) are put into and/or out of storage in accordance with an electronically stored sampling plan (12) and/or inspection plan (13), for inspecting a specific number of containers per unit time, per production batch and/or per number of containers filled (4).

14. The method according to claim 12 or 13, wherein, according to an electronically stored sampling plan (12), the containers (4) are purposefully discharged from the filling line (7) and made available with an electronic mark and put into storage.

15. The method according to one of the claims 12 to 14, wherein, when the containers (4) are put into storage, information for indentifying the containers (4), the filling product and/or the product batch, time stamps, associated filling unit numbers and/or associated capping unit numbers are stored and assigned to the storage area (3) charged with the respective containers (4).

16. The method according to one of the claims 12 to 15, wherein, according to the availability of associated inspection units (9.1, 9.2, 9.3, 9.4), the containers (4) are taken out of storage and, in so doing, are in particular distributed to parallel transport paths (8a) and/or inspection units (9.1, 9.2, 9.3, 9.4).

17. The method according to one of the claims 12 to 16, further used for inspecting the containers (4) and/or a filling product contained in the containers (4), and comprising a step d), in which a Brix value of the filling product, a CO₂ content of the filling product, a diet concentration of the filling product, a weight of the containers (4) and/or a closing force of the containers (4) are measured.

18. The method according to claim 17, wherein the inspection units (9.1, 9.2, 9.3, 9.4) execute at least two different inspections at different containers (4) such that they overlap in time.

19. The method according to one of the claims 12 to 18, wherein step a) further comprises providing faulty containers (4') discharged from the filling line (7) and wherein, in step b), these containers (4') are mechanically put into a separate disposal store (22) and/or mechanically placed on a disposal conveyor (23), the disposal conveyor (23) leading in particular up to a waste container (24) for faulty and/or offline inspected containers (4', 4).

## Revendications

1. Unité de stockage et de distribution (1, 21) pour une installation de remplissage de récipients (20, 30), comprenant :
- un tampon de stockage (2) avec des zones de stockage (3) pour des récipients individuels (4), réparties en particulier selon un quadrillage, avec une alimentation en récipients (5) à connecter à une ligne de rejet (6) d'une ligne de remplissage (7) et avec une évacuation de récipients (8) à connecter à des unités d'inspection (9.1, 9.2, 9.3, 9.4) ;
- un robot (10) pour stocker les récipients remplis (4) en les transférant de l'alimentation en récipients (5) aux zones de stockage (3) et pour déstocker les récipients (4) en les transférant des zones de stockage (3) à l'évacuation de récipients (8) ; et
- un automate programmable (11) pour le robot (10), conçu pour déstocker sélectivement les récipients (4) indépendamment du temps et/ou de l'ordre de leur stockage,
**caractérisée en ce que** le robot (10) est conçu pour manipuler les récipients individuels (4) par saisie de leur goulot et/ou zone de fermeture lors de leur stockage dans une zone de stockage respective (3) et lors de leur déstockage hors d'une zone de stockage respective (3), et **en ce que** l'automate (11) est conçu pour un déstockage sur la base d'un plan d'inspection (13) enregistré électroniquement.

2. Unité de stockage et de distribution selon la revendication 1, dans laquelle l'automate (11) est conçu pour un stockage sur la base d'un plan d'échantillonnage (12) enregistré électroniquement.

3. Unité de stockage et de distribution selon la revendication 1 ou 2, dans laquelle l'alimentation en récipients (5) comprend une bande transporteuse (5a) pour fournir successivement les récipients (4), en particulier dans l'ordre d'un plan d'échantillonnage (12) enregistré électroniquement.

4. Unité de stockage et de distribution selon l'une des revendications précédentes, dans laquelle le tampon de stockage (2) comprend au moins huit zones de stockage (3), en particulier au moins seize zones de stockage (3).

5. Unité de stockage et de distribution selon l'une des revendications précédentes, dans laquelle le tampon de stockage (2) comprend au moins un plateau de stockage interchangeable (2a) pour fournir les zones de stockage (3) et une grille de stockage correspondant aux zones de stockage (3) ainsi fournies est stockée de manière récupérable dans l'automate (11).

6. Unité de stockage et de distribution selon l'une des revendications précédentes, dans laquelle l'évacuation de récipients (8) comprend au moins une bande transporteuse ou un circuit de transport similaire (8a, 8b) à connecter à au moins une unité d'inspection (9.1).

7. Unité de stockage et de distribution selon l'une des revendications précédentes, dans laquelle l'évacuation de récipients (8) comprend au moins une bande transporteuse ou un circuit de transport similaire (8a, 8b) à connecter à au moins deux unités d'inspection, en particulier à au moins deux unités d'inspection différentes (9.1, 9.2, 9.3, 9.4).

8. Unité de stockage et de distribution selon l'une des revendications précédentes, dans laquelle en outre un stockage d'élimination (22) et/ou un convoyeur d'élimination (23) est présent, et dans laquelle le robot (10) est conçu pour distribuer sélectivement en particulier les récipients défectueux (4') au stockage d'élimination /convoyeur d'élimination (22, 23).

9. Unité de stockage et de distribution selon l'une des revendications précédentes, dans laquelle en outre un dispositif de renvoi (25) est présent pour renvoyer les données entre au moins l'une des unités d'inspection (9.1, 9.2, 9.3, 9.4) connectées à l'évacuation de récipients (8) et une unité d'inspection en ligne (19) agencée en amont de la ligne de rejet (6).

10. Installation de remplissage de récipients (20, 30) avec une unité de stockage et de distribution (1, 21) selon l'une des revendications précédentes et avec en aval de celle-ci des unités d'inspection associées (9.1, 9.2, 9.3, 9.4) pour le contrôle des récipients (4) et/ou d'un produit de remplissage présent dans les récipients en mesurant un degré Brix du produit de remplissage, une teneur en CO₂ du produit de remplissage, une concentration diététique du produit de remplissage, un poids du récipient (4) et/ou une force de fermeture du récipient (4).

11. Installation de remplissage de récipients selon la revendication 10, dans laquelle l'unité de stockage et de distribution (1, 21) et les unités d'inspection (9.1, 9.2, 9.3, 9.4) sont disposées sous atmosphère protectrice dans une zone de laboratoire (14) spatialement séparée de la ligne de remplissage (7).

12. Procédé de stockage et de distribution de récipients remplis (4) dans une installation de remplissage de récipients (20, 30), comprenant les étapes suivantes :
a) fourniture de récipients (4) rejetés d'une ligne de remplissage (7) ;
b) stockage mécanique des récipients (4) dans un tampon de stockage (2) avec en particulier des zones de stockage (3) pour les récipients individuels (4) distribuées selon un quadrillage ; et
c) déstockage mécanique et acheminement des récipients (4) jusqu'aux unités d'inspection (9.1, 9.2, 9.3, 9.4),
dans lequel le déstockage des récipients (4) est effectué au moyen d'un automate programmable (11) sélectivement et indépendamment du moment et/ou de l'ordre de stockage des récipients (4),
**caractérisé en ce que** les récipients (4) sont manipulés individuellement par saisie de leur goulot et/ou zone de fermeture par au moins un robot (10) et déstockés selon un plan d'inspection (13) enregistré électroniquement lors de leur stockage dans une zone de stockage respective (3) et lors de leur déstockage hors d'une zone de stockage respective (3), dans lequel le plan d'inspection (13) est basé sur la capacité des unités d'inspection (9.1, 9.2, 9.3, 9.4) et sur le temps requis pour les inspections individuelles et/ou prend en compte la disponibilité des unités de contrôle individuelles (9.1, 9.2, 9.3, 9.4).

13. Procédé selon la revendication 12, dans lequel les récipients (4) sont stockés et/ou déstockés selon un plan d'échantillonnage (12) et/ou un plan d'inspection (13) enregistré électroniquement pour l'inspection d'un nombre déterminé de récipients par unité de temps, par lot de production et/ou par nombre de récipients remplis (4).

14. Procédé selon la revendication 12 ou 13, dans lequel les récipients (4) sont rejetés d'une ligne de remplissage (7) de manière ciblée conformément à un plan d'échantillonnage (12) enregistré électroniquement et sont pourvus d'un identifiant électronique et stockés.

15. Procédé selon l'une des revendications 12 à 14, dans lequel, lors du stockage des récipients (4), des informations d'identification des récipients (4), du produit de remplissage et/ou du lot de produit, d'horodatage, de numéros d'éléments de remplissage associés et/ou de numéros d'organes de fermeture associés sont enregistrés et associées à la zone de stockage (3) attribuée.

16. Procédé selon l'une des revendications 12 à 15, dans lequel les récipients (4) sont stockés en fonction de la disponibilité des unités d'inspection associées (9.1, 9.2, 9.3, 9.4) et sont distribués en particulier sur des circuits de transport (8a) et/ou des unités d'inspection (9.1, 9.2, 9.3, 9.4) branchés en parallèle.

17. Procédé selon l'une des revendications 12 à 16, destiné en outre à l'inspection des récipients (4) et/ou d'un produit de remplissage présent dans les récipients (4), et comprenant une étape d) dans laquelle un degré Brix du produit de remplissage, un taux de CO₂ du produit de remplissage, une concentration alimentaire du produit de remplissage, un poids du récipient (4) et/ou une force de fermeture du récipient (4) sont mesurés.

18. Procédé selon la revendication 17, dans lequel les unités d'inspection (9.1, 9.2, 9.3, 9.4) effectuent au moins deux inspections différentes sur différents récipients (4) avec un chevauchement temporel.

19. Procédé selon l'une des revendications 12 à 18, dans lequel, à l'étape a), des récipients défectueux (4') rejetés de ladite ligne de remplissage (7) sont en outre pourvus et sont, à l'étape b), stockés mécaniquement dans un stockage d'élimination séparé (23) et/ou placés mécaniquement sur un convoyeur d'élimination (23), dans lequel le convoyeur d'élimination (23) conduit en particulier à un conteneur à déchets (24) pour récipients défectueux et/ou inspectés hors ligne (4', 4).
